# EUROPEAN PATENT SPECIFICATION

(11) **EP 1 459 208 B1**
(45) Date of publication and mention of the grant of the patent: **20.04.2016**
(21) Application number: 02783118.9
(22) Date of filing: 03.12.2002
(51) Int. Cl.: G06Q 30/06, G06F 17/30, H04L 9/00

(54) **METHOD AND APPARATUS FOR CONTENT ACTIVATION**
VERFAHREN UND VORRICHTUNG ZUR INHALTSAKTIVIERUNG
PROCEDE ET DISPOSITIF POUR L'ACTIVATION DE CONTENU

(30) Priority: 05.12.2001 FI 20012399
(43) Date of publication of application: 22.09.2004
(73) Proprietor: Sofia Digital OY, 00100 Helsinki (FI)
(72) Inventor: KANERVA, Mika, FIN-33820 Tampere (FI)
(74) Representative: Berggren Oy Ab
(86) International application number: PCT/FI2002/000980
(87) International publication number: WO 2003/050717

(56) References cited:
- WO-A2-00/30323
- WO-A2-02/44843
- US-A- 5 634 012
- US-A- 5 734 719
- US-A- 6 006 332
- US-B1- 6 202 056
- V Paxal ET AL: "DVB-S EBU TECHNICAL REVIEW - June 2000 1 / 6 V. Paxal", EBU Technical Review, 30 June 2000 (2000-06-30), XP055185432, Retrieved from the Internet: URL:https://tech.ebu.ch/docs/techreview/tr ev_283-paxal.pdf [retrieved on 2015-04-23]
- KYU-TAE YANG ET AL: 'THE CONDITIONAL ACCESS FLOW USING SUBSCRIBER SMART CARD WITH KOREASAT DBS RECEIVER' IEEE TRANSACTIONS ON CONSUMER ELECTRONICS vol. 43, no. 3, 01 August 1997, pages 330 - 336, XP011083541

## Description

The invention relates to a method and a system for content activation. The invention relates more specifically to ordering, authenticating and taking into use electronic services by means of a terminal connected to a data transmission network.

With increasingly available rapid data transmission networks, there has been a marked increase in free and pay services offered over these networks. Not only programs like ordinary television programmes are transmitted over digital data transfer networks, such as, for instance, that of a digital television transmission system, but also programs and services available on order. The programs or services on order may be order films or various services subject to a charge and/or free of charge, such as, for instance, weather report information, horoscopes and joke services.

Using the state-of-the-art solutions, it is fairly simple to deliver the content of a free service to a receiver. However, various problems will occur when a program or a service relating to a pay content is to be delivered to a receiver. One of the problems relates to perceiving the payment for the service of the pay content from the receiver who has ordered the service. A second central problem relates to the delivery of the content comprising a pay content to the receiver who has paid the service, without making the service available free of charge to other users in the same data network.

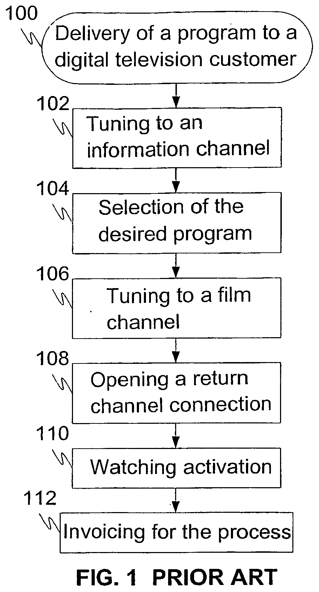

One known solution to the problems mentioned above is the state-of-the-art solution 100 shown in figure 1, in which a program delivered in pay or order-video or order-television systems is encrypted based on the use of a separate encryption or smart card. In state-of-the-art solutions, the service user has to make an agreement with the service provider in advance, the service provider giving the service user a separate service reception and/or decryption device and a smart card to be placed in this, which comprises a decryption code for decrypting a program transmitted in encrypted form. Using the decryption code or algorithm included in the smart card, the encryption device receiving the service is given instructions and/or permission to decrypt and display the service or program to be received. State-of-the-art smart cards may be valid over a given period, regardless of the amount of use, for instance, or optionally, after the user has selected a given program, the program is activated for the code of the user's smart card, and the identifier data in the card and information about watching is subsequently transferred to the service provider over a return channel.

In the solution shown in figure 1, a typical pay content to be delivered to the receiver may be e.g. an order film, i.e. a kiosk service. In such service, the service provider provides a limited amount of fairly new films, for instance, at several starting moments. The receiver may choose the appropriate starting moment and activate watching by means of the smart card and the return channel. In state-of-the-art solutions, the return channel is typically provided by means of a modem integrated in a digital adapter.

In step 102 of the state-of-the-art solution 100, the spectator is tuned to the information channel of a kiosk service, where the service provider presents the range and show times of the kiosk service. In step 104, the user may choose the film he desires, the digital adapter being tuned in step 106 to a channel where the film is about to start. In step 108, the adaptation composed by the service provider opens a return channel connection to the server, where the spectator logs in, after which watching can be activated in step 110. In a solution of this kind, invoicing typically takes place in connection with the order bill in step 112.

WO 00/30323 discloses a method for performing a conditional content in a terminal comprising the features of the preamble of claim 1.

However, state-of-the-art solutions involve a number of problems. Thus, for instance, encryptions based on state-of-the-art encryption and smart cards involve the drawback of requiring in each watching situation the decryption system of the encryption system used each time. Additionally, classification of contents into contents liable to a charge and free of charge by means of currently available solutions is not accurate. Invoicing is also awkward to carry out in state-of-the-art solutions. Another factor limiting the use is the crucial feature of the solutions requiring the service user and/or program receiver to have a previously concluded agreement with that specific service/content provider or operator, such as for instance a pay television operator, whose service/content he wishes to use or watch. In this connection, is its impossible to use the ordered services or to order the programs quite anonymously, as desired for one reason or another.

The purpose of the invention is to provide a solution allowing reducing the prior art inconveniences mentioned above. The invention aims at solving the issue of delivering to the user pay services without the user having to conclude an agreement with the pay service provider. Another purpose of the invention is to clearly classify services that are free of charge and liable to a charge, i.e. conditional. A still further purpose of the invention is to allow for anonymous orders of pay services.

The objectives of the invention are achieved by delivering to the user's terminal a software product comprising software with functions for performing pay contents. The performance of pay contents is provided for by sending an authentication request formed by the software and identifying at least partly the pay content to the authentication server, which, in turn, at least partly on the basis of the authentication request, forms an authentication code for carrying out the pay content, which is fed to the terminal. To allow anonymity, the authentication request can be delivered to the authentication server over a return channel that makes anonymity possible.

The method of the invention for delivering a conditional content to a terminal over a data transmission network, for authenticating use of conditional content and for taking it into use is characterised by comprising
- delivering a software product to the user's terminal, the software product comprising a function for ordering at least one part of a conditional content in order to generate the necessary authentication request and a function for carrying out at least one part of a conditional content,
- generating at least partly an authentication request identifying said at least one part of a conditional content using said function included in the software product for delivery at least partly to the authentication server in order to form an authentication code corresponding to said authentication request,
- generating an authentication code for delivery to said terminal by means of the authentication server, based at least partly on the authentication request delivered to the authentication server, and
- delivering said authentication code to said terminal for performance of said at least one part of a conditional content and performing said at least one part of a conditional content.

The system of the invention for delivering a conditional content to a terminal connected to a data transmission network, for authenticating use of the conditional content and for taking it into use, the system comprising at least a data transmission network, at least one terminal connected to this and a unit producing conditional contents and an authentication server, is characterised in comprising
- means for delivering a software product to the user's terminal, the software product comprising a function for forming an authentication request needed for ordering at least one part of a conditional content and a function for performing at least one part of a conditional content,
- means for at least partly forming an authentication request identifying said at least one part of a conditional content using the function included in said software product with a view to deliver said authentication request at least partly to the authentication server for forming an authentication code corresponding to said authentication request,
- means for forming an authentication code based on the authentication request delivered to the authentication server for delivery to said terminal, and
- means for delivering said authentication code to said terminal with a view to performing at least one part of a conditional content, and means for performing said at least one part of a conditional content.

The authentication server of the invention for authentication of use of at least one part of a conditional content delivered to a terminal connected to a data transmission network is characterised by comprising
- means for at least partly receiving an authentication request identifying said at least one part of a conditional content,
- means for forming an authentication code at least partly based on the authentication request delivered to said authentication server for delivery to said terminal, and
- means for delivering said authentication code to said terminal for performing said at least one part of a conditional content.

The software product of the invention for receiving a conditional content in a terminal connected to a data transmission network, for authentication of use of the conditional content and for taking it into use, is characterised by the fact that said software product comprising a function needed for performing at least one part of a conditional content is arranged for delivery to and installation in the user's terminal, and is additionally characterised by comprising
- means for at least partly forming an authentication request identifying said at least one part of a conditional content using said function included in said software product, for delivery of said authentication request at least partly to the authentication server for forming an authentication code corresponding to said authentication request,
- means for receiving and analysing said authentication code, and
- means for performing said at least one part of a conditional content in accordance with said authentication code.

The terminal of the invention, which is connected to a data transmission network, for receiving a conditional content, for authenticating use of the conditional content and for taking it into use, is characterised by the terminal being arranged for reception and installation of a software product comprising a function needed for performing at least one part of a conditional content in the terminal for performance of the software product, is additionally characterised by the terminal comprising
- means for forming at least partly an authentication request identifying said at least one part of a conditional content by means of said function included in said software product for delivery of the authentication request at least partly to the authentication server for forming an authentication code corresponding to said authentication request,
- means for receiving and analysing said authentication code, and
- means for performing said at least one part of a conditional content in accordance with the authentication code.

A number of preferred embodiments of the invention are defined in the dependent claims.

The invention achieves marked advantages over prior art solutions. The method of the invention enables any user to order easily and anonymously the free and/or conditional content he pleases to his terminal using a program received by the terminal. The invention enables transmission not only of a free content, such as services and programs, but also of a content liable to charge, i.e. conditional, to users, over data transmission networks such as a digital television transmission system, without the user having to register or to conclude an agreement with the content provider.

Additionally, the invention enables the user to order the conditional content delivered in accordance with the invention regardless of the location, without detriment to invoicing. With the invention, a bill incurred by the order of a conditional content can always be unambiguously directed for display of the conditional content to the user who has ordered the required authentication code needed for showing the conditional content, so that any abuse of conditional, i.e. service liable to charge, can be reduced. Consequently, it is possible for each user on public premises, such as hospitals, prisons, schools, hotels, large students dormitories or residences to order the content he pleases, with the bill directed exclusively to the person who has ordered the content. This avoids any conflicts regarding splitting of bills righteously.

Using the invention, the conditional content can be ordered in advance for a specific moment and also for a given period of validity, and this means that parents may order a suitable program for their children for a period during which the children will be staying alone at home, avoiding showing any X-rated conditional contents to the children.

This patent application uses the following concepts, among other things:
- "conditional content" is a content liable to charge delivered over data transmission networks, such as, for instance, a digital television transmission network, which the user can select for watching or performance on his terminal. The conditional content may be e.g. a pay order video or film or any other pay service, such as a weather service, a horoscope or a joke service.
- "software" is a functional unit preferably comprising algorithmics to be delivered to the terminal, which enables performance of conditional contents delivered in a data transmission network, such as a digital television transmission network. The software also generates an authentication request delivered to the authentication server and checks the validity of an authentication code corresponding to the authentication request delivered by the authentication server with a view to performance of a given conditional content. The software contains typically a function for conditional performance of at least one part of the conditional content.
- "authentication code" is a code fed to the terminal corresponding to the authentication request formed by the authentication server, the software in the terminal that has confirmed this code as valid being able to perform or show the program or service comprising a conditional content or at least part of it. The authentication code may comprise numbers, letters or special signs or combinations of these, and it can be delivered to the terminal by a text message or e-mail, for instance. The authentication code may be e.g. PuY65. The authentication code can be parameterised e.g. by combinations of conditional contents, combinations of said conditional content validity periods and various identifier data readable e.g. in the terminal.
- "authentication server" is a third party who is authorised by the providers of software and conditional contents and who can form an authentication code to be fed to the terminal. The authentication server may also be integrated in a provider unit of software and conditional contents. The authentication server has been arranged so as to know the algorithmics used by the software run in the terminal for showing and/or using conditional contents and/or the method used for encrypting the software and/or conditional contents, the authentication server being able to form the authentication code needed for performing the conditional contents.
- "authentication request" is a request which is formed by the software in the terminal for delivery to the authentication server, which at least partly identifies the at least one conditional content selected by the user. The authentication request may relate to several conditional contents and to the moment desired for performing or showing the conditional content. The authentication request may also comprise data at least partly identifying the terminal. The authentication request may comprise numbers, letters and special signs or combinations of these, and it can be delivered

to the authentication server over a return channel, for instance. The authentication request may be e.g. eXz34.

Preferred embodiments of the invention are explained in greater detail below, with reference to the accompanying drawings, in which
- Figure 1: shows a prior art solution 100 for delivery of pay content to the terminal of the service user,
- Figure 2: is a flow diagram of an exemplified method 200 for performing a conditional content in accordance with one embodiment of the present invention,
- Figure 3: is a flow diagram of an exemplified method 300 for forming an authentication request in accordance with one embodiment of the present invention,
- Figure 4: is a flow diagram of an exemplified method 400 for forming an authentication code in accordance with one embodiment of the present invention,
- Figure 5: is a flow diagram of an exemplified method 500 for performing a conditional content in accordance with one embodiment of the present invention,
- Figure 6: is a block diagram of an exemplified terminal 600 in accordance with one embodiment of the present invention,
- Figure 7: is a block diagram of an exemplified software product 700 in accordance with one embodiment of the present invention,
- Figure 8: is a block diagram of an exemplified authentication server 800 in accordance with one embodiment of the present invention, and
- Figure 9: shows an exemplified system 900 for performing a conditional content in accordance with one embodiment of the present invention.

The prior art solution shown in figure 1 has been discussed in detail in the survey of the state of the art.

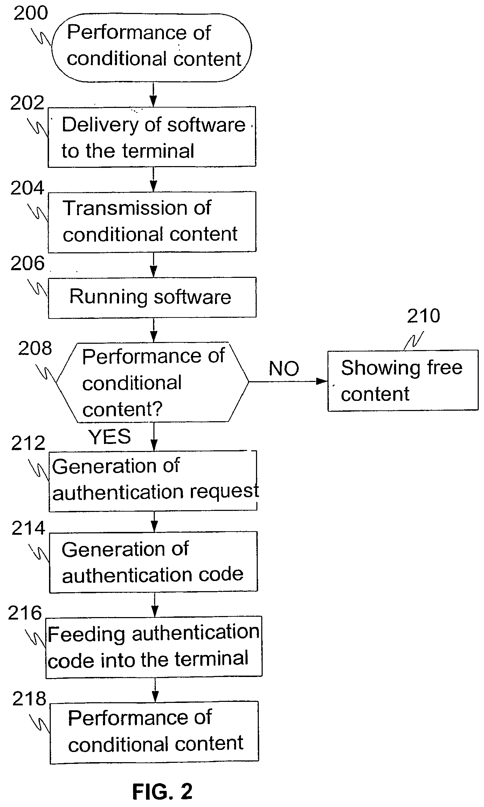

Figure 2 is a flow diagram of an exemplified method 200 for performing a conditional content in accordance with one embodiment of the present invention, starting with delivery of software needed for performing conditional partitions to the user's terminal in step 202. The software to be delivered may preferably load down and install itself in the user's terminal and pass into a mode of function, i.a. for reception and display of contents to be transmitted over the data transmission network, such as free contents, free demonstration parts of conditional contents and also conditional contents. Optionally, the software can be loaded and installed e.g. as a result of a separate command given by the user, or also as a result of a signal given by preceding outdated software. The software is preferably delivered over a digital data transmission network, such as a digital television transmission network, to which the terminal is connected. The software can optionally be delivered also over any other data transmission method and system known by those skilled in the art, such as, for instance, a memory card or a CD and DVD disc.

In the digital data transmission network to which the user terminal using the software is connected, a program, such as a conditional content and a free program, and perhaps also free demonstration parts of a conditional content, are transmitted in step 204. Then the software in the terminal can be run e.g. in step 206, so that the software serves to show the user in the digital data transmission network both the free programs and services and the free parts or demos of conditional contents, i.e. pay programs and services transmitted over the digital data transmission network. In step 206, the user can be shown for free e.g. a list of horoscopes, from which he may pick his own horoscope using some peripheral device, such a remote control or arrow keys on the terminal or similar control means, or most preferably, by pressing a key, such as the OK key.

The user may preferably scan demo parts of conditional contents for free, and then, in step 208, he may decide about performing any conditional content. The conditional content to be performed may be e.g. an order video or order film, a piece of music or any other pay service, such a weather, horoscope or joke service. If the user wishes to perform a conditional content, he may, in step 208, press a key of his terminal or the terminal remote control in order to accept performance of the conditional content. In case the user does not want to perform a conditional content, he may press e.g. another key of this terminal or terminal remote control in order to refuse performance of a conditional content, and then a free program and/or services can be shown to the user in step 210. Optionally, a situation where nothing is done within a given period can be taken as a refusal, and then step 210 is continued at the end of a delay of three seconds, for instance.

In one embodiment of the invention, various services can be shown to the user in step 208, such as horoscope services, and then, if he so wishes, the user may choose e.g. the horoscope service and further the user's specific horoscope. Step 208 preferably shows information about payment of the service, such as the service fee, and instructions for more detailed order of a pay horoscope service. The instruction may be e.g. a command to press a specific key of the terminal or the remote control. Additionally, in one embodiment, the user may order many services at the same time, and then he may in step 208 select all the contents he wants performed on the "shopping cart" principle, where the user collects the contents he wants into a virtual shopping cart. Further, in one embodiment the user may determine the separate validity of the content performed in step 208, depending on the service quality. The price of the service or order may be determined by the quantity, quality, moment of performance and any validity period of the services or contents ordered.

As the user orders a conditional content, such as a horoscope service, an authentication request to be delivered to the authentication server is formed in step 212 by means of software in the terminal. The authentication request is formed based on the conditional contents chosen by the user and on the validity periods of the conditional contents possibly determined by the user. Additionally, an authentication request may comprise data that identify the software in the terminal and/or to be run in the terminal. The authentication request may relate to price information about the service to be ordered, which can be read by means of software, for instance. The price information may be integrated in the demonstration part of the conditional content to be shown, for instance, or optionally the software can read the price information over a return channel, such as directly in a database of the producer of the conditional content.

The authentication request may consist of numbers, letters and special signs, or a combination of these, and it may be e.g. eXz34. The authentication request can be used unambiguously for identifying the conditional contents chosen by the user and their possible validity periods for the authentication server. Additionally, in one embodiment, the authentication request may serve to determine also the user terminal or data identifying this to the authentication server.

After the authentication request has been formed, the authentication request can be delivered to the authentication server for forming of an authentication code. In a preferred embodiment of the invention, the authentication code formed is shown to the user over the terminal or a receiver, such as a digital television, connected to the terminal. In connection with the authentication request to be shown, other instructions for transmitting an authentication request to the authentication server can also be shown. The instruction may preferably comprise a prompt to send an authentication request eXz34 in the form of a text message over a mobile unit to the number 12345. The instruction may also indicate the price of the service available with said authentication request, e.g. 1€, which is charged to the user in connection with the mobile phone bill, for instance.

The authentication request is delivered to the authentication server by any other method and system for data transmission understood by those skilled in the art, such as, for instance, by e-mail to a given e-mail address, and then also bank and credit card data are typically sent to the e-mail address for payment of the bill for performance of the conditional content. Additionally, in one embodiment, the authentication request eXz34 can be sent over the Internet or any other IP-based data network, such as using an XML form, and then invoicing can also be done with an XML form in cooperation with various Internet banks, for instance. The authentication request eXz34 can also be sent to a call centre, which takes care of invoicing in connection with the user's phone bill, for instance.

In step 214, the authentication server forms an authentication code on the basis of the authentication request sent by the user and the encryption method used in encrypting the conditional contents defined in the authentication request. The authentication code is formed by also typically considering the conditional content ordered and the data identifying the terminal. The data identifying the terminal may nevertheless be optional. For forming the authentication code, not only the parameters defined in the authentication request can be used, but also other parameters, such as issues caused by the combinations of contents to be performed and issues relating to the validity of said contents. The authentication code may consist of numbers, letters and special signs, or a combination of these, and it can be e.g. PuY65.

In generating the authentication code, the authentication server may check the payment of the bills incurred by contents ordered in the authentication request for example by sending an enquiry to the quarter having carried out invoicing, such as, for instance, an Internet bank or a mobile phone operator. Optionally the operator to whom the user transmits the authentication request may carry out invoicing and transmit the authentication request forward to the authentication server and also provide information about payment of the bill.

After the authentication code has been formed, it is delivered to the user preferably over the same data transmission network as the one over which the user had sent the authentication request. The authentication code can be sent e.g. via the same operator, to whom the user had sent the authentication request and who charged the customer and sent the authentication request forward to the authentication server. However, the authentication code can be sent to the user using any other data transmission method known by those skilled in the art, such as e.g. a SMS message or by e-mail. The authentication code can also be dictated to the user over the phone. Optionally, the authentication code can be sent directly to the user's terminal on the basis of terminal identification data over a digital data transmission network.

After the authentication code has been delivered, the authentication code can be fed to the terminal in step 216. The code can be fed using e.g. the terminal and/or the keyboard of the terminal. After the authentication code has been fed, the terminal can check the validity of the fed authentication code using software run in the terminal, for instance. If the fed authentication code is valid, the selected conditional content can be shown or performed in step 218, depending on the content. In step 218, the defined validity period of the performance and/or showing of the conditional content defined in the authentication code can be taken into account, so that performance of the conditional content can be stopped when the validity expires. In one embodiment, the user can be informed of the expiry of the validity the moment before this expiry and he can be offered the opportunity to go on performing the conditional content, for instance, by ordering a new code. This can be done by proceeding to step 208 and subsequently performing step 210 or steps 212-218, depending on the actions taken by the user.

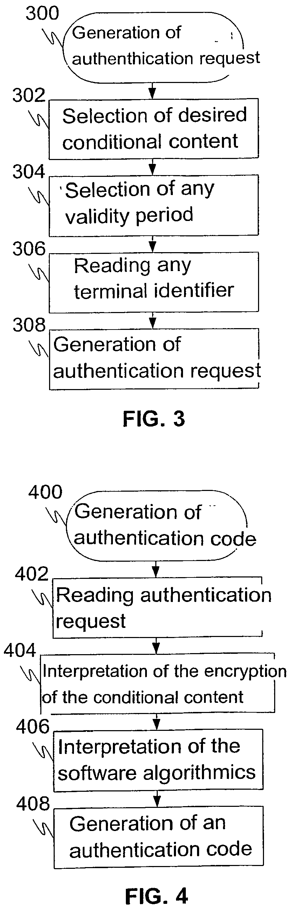

Figure 3 shows a flow diagram of an exemplified method 300 for forming an authentication request in accordance with one embodiment of the present invention. First, the user may select the at least one conditional content he wants in step 302, and then he may request in step 304, depending on the type of selected conditional content, the validity of showing and/or performance of the conditional content. In step 304, the user may also be asked other details relating to the choice, such as, for instance, the moment of showing or performing the conditional content. When the user determines his choice and has answered any additional questions, in step 306, the identifier of the terminal can be read preferably in electronic form, such as for instance, the serial number of the terminal processor or memory unit or any similar data identifying the terminal. Additionally, in step 306, the order price can be determined. The price can be determined on the basis of price information integrated in the content demo parts, or the price can be enquired from a databank of the producer of the conditional content.

In step 308, an authentication request for forming the authentication code required for performing the conditional content can be formed so as to comprise processed data collected in steps 302-306. The authentication request formed in step 308 is preferably generated by means of software run in the terminal and with means for data processing in the terminal. Further, the software in the terminal may include information about itself, such as its version number, validity period and algorithmics in the authentication request it has formed. The authentication request formed may be encrypted by a given encrypting method, and then a given quarter alone, such as the authentication server, can decrypt the encryption and interpret the information contained in the authentication request.

Figure 4 is a flow diagram of an exemplified method 400 for forming an authentication code in one embodiment of the present invention. The authentication code can be formed e.g. by means of a separate authentication server. Initially, all the matters asked in the authentication request can be read in step 402, such as the desired conditional contents, their validity periods and any desired moment of performing the conditional contents. Moreover, step 402 may determine in the authentication request the user's terminal identifier, such as the serial number of the terminal processor or memory unit, or any similar terminal identifying data in the authentication request.

Step 404 can determine the encrypting method or algorithm used in the encryption of one or more conditional contents ordered by the user. Additionally, for forming an authentication code, the algorithmics of the software run in the terminal can be determined and taken into account in step 406. The authentication server can be arranged in data communication with the producer of the conditional content and the software used in the terminal, allowing the authentication server to enquire the information needed for forming the authentication code needed for performing or showing the conditional content from the producer of the conditional content and the software. Additionally, in steps 404 or 406, the price of the ordered conditional contents can be checked e.g. in a database of the producer of the conditional content. Moreover, in steps 404 or 406 it is also possible to check that the user has been correctly charged and that the user has paid the correct amount or that a bill has been or will be sent to him in some other way, such as, for instance, in connection with the phone bill from the mobile phone operator.

Finally, in step 408, the authentication server can form a suitable authentication code in steps 402-406 on the basis of the data it has acquired so as to enable the user's terminal and/or terminal software to perform and/or show the conditional content picked by the user. The authentication request formed can comprise data collected from steps 402 to 406, in processed form, for instance. The authentication server checks the payment of the bill before they authentication code is sent. It should also be noted that the authentication server forming the authentication code of the invention may be either a third reliable quarter separate from the provider of the conditional content and software, or optionally a functional unit arranged in connection with the producer of the conditional content and/or software.

The formed authentication code may be encrypted by a given encrypting method, for instance, and in that case only software run in the terminal, especially the software having formed the authentication request, is able to decrypt the encryption and to interpret the information contained in the authentication code and to perform the related conditional content.

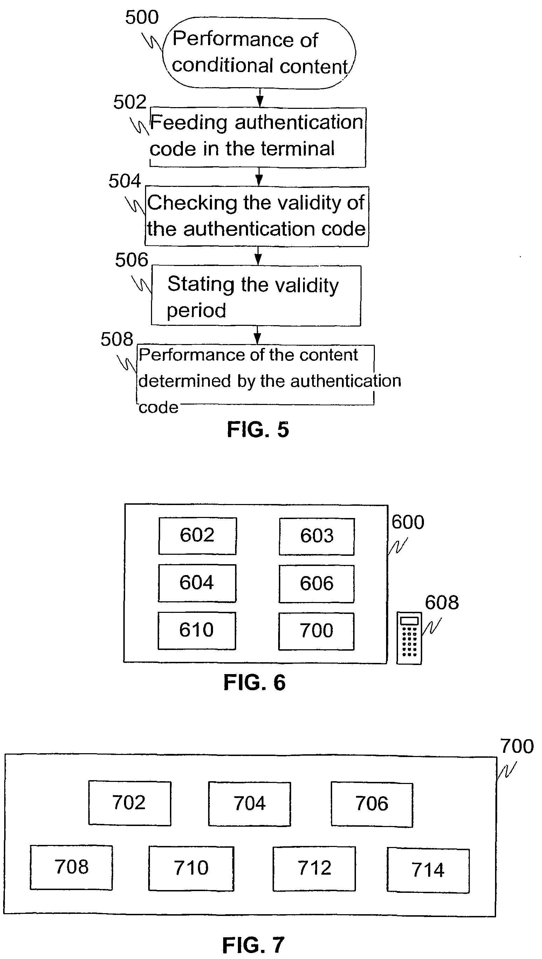

Figure 5 shows a flow diagram of an exemplified method 500 for performing a conditional content in one embodiment of the present invention, in which, first, an authentication code is fed to the terminal in step 502. The authentication code may be fed using e.g. the keyboard or remote control of the terminal. Step 504 checks the validity of the authentication code, for instance by comparing any terminal identifier data indicated in the authentication code with the terminal identifier data. The terminal identification data indicated in the authentication code is typically the same as the terminal identification data indicated to the authentication server in the authentication request. If said identification data tally with the terminal identification data, the authentication code can be considered valid and provisions for performance of the conditional content can be continued.

The validity of the authentication code can be confirmed by any other confirmation method known by those skilled in the art, such as, for instance, encrypting the authentication code in such a way that only the quarter having ordered the authentication code is able to decrypt it, i.e. the terminal or software having formed the authentication request.

After the authentication code has been confirmed valid, step 506 can check any performance moment determined in the authentication code and select the conditional content determined for performance in the authentication code among the contents transmitted over the data transmission network. Step 506 may also take account of any validity period of the performance of the conditional content and any other informative issues. Finally, step 508 may perform and/or show the conditional content defined in the authentication code. The conditional contents transmitted over the data transmission network are preferably sent in an encrypted form, and then the encryption of the conditional contents to be performed can be decrypted in step 508 before showing the conditional content, using e.g. data intended for decrypting delivered in connection with the authentication code.

The encryption of conditional contents can optionally be decrypted using e.g. key intended for decrypting the encryption included in the software product, provided that a separate permission for decryption has been given e.g. in connection with the authentication code.

Figure 6 shows an exemplified terminal 600 in accordance with the present invention, the terminal comprising data communication means 602 for receiving software transmitted in a data transmission network and also free contents, demo parts of free conditional contents and conditional contents. In one embodiment, data communication means 602 can also be used for sending data in electronic form from the terminal to the data transmission network. It is also possible to communicate over the data transmission network 602 with a device that may be connected to the terminal 600, such as, for instance, a -digital television or a computer comprising a digital television card.

Further, it is possible to communicate over the data communication means 602 with a remote control 608 communicating with the terminal, acting e.g. as an infrared sender and/or receiver. The remote control may communicate with the data communication means of the terminal also over other data transmission protocols known by those skilled in the art, such as, for instance, over Bluetooth or a wire communication. Using data communication means 602, it is also possible to receive an authentication code sent by the authentication server either fed by a remote control or delivered by a data transmission network. Optionally, the authentication code can be fed to the terminal 600 also by means of a guide unit 603, such as a keyboard provided in the terminal.

The terminal 600 may comprise at least one memory unit 604 comprising a volatile and/or non-volatile storage and at least one processor 606 for performing and storing the software 700 to be run in the terminal. Also, using the memory unit 604 in the terminal 600, it is possible to store other data in electronic form, such as, for instance, data identifying the terminal 600, data describing the user or the user's preferences, and especially software to be transmitted in the data transmission network 600, data describing the user or the user's preferences, and especially software to be transmitted in the data transmission network and free contents, demo parts of free conditional contents and conditional contents, with a view to subsequent showing of these, for instance.

Further, it is possible to use at least one memory unit 640 and at least one processor 606 included in the terminal 600 for forming an authentication request in compliance with the algorithmics of the software or software product 700, to encrypt the authentication request under an encryption method included in the software 700, for instance, and to decrypt the received authentication code possible in encrypted form under the encryption method included in the software 700, and also to perform other functions defined by the software 700, such as performing and/or showing a conditional content defined in the authentication code.

By means of the memory unit 604 and the processor 606, the terminal can also form an authentication request identifying the conditional content or part of the conditional content chosen by the user under the software performed in the terminal, for delivery to the authentication server. Additionally, using the memory unit 604 and the processor 606, the terminal 600 may analyse data included in the authentication code it has received, such as, for instance, determine the moment of performance, the validity period of a conditional part, and the conditional part that the terminal can perform using said authentication code. Further, the terminal 600 may comprise means 610 for performing a conditional content or at least one part of a conditional content in conformity with the authentication code formed by the authentication server.

Figure 7 shows a block diagram of an exemplified software product 700 to be run in a terminal 600 in accordance with the present invention. The software product 700 comprises typically means 702 for separating, processing and displaying to the user, e.g. over a digital television, of free and conditional parts to be sent from a data transmission network, such as digital television transmission network to a terminal 600. The software product 700 also comprises means 704 for identifying the conditional content chosen by the user, for reading any validity period determine or chosen by the user, and for reading any performance moment determined or chosen by the user. The software product 700 may also comprise means 706 for reading the terminal identification data e.g. in the processor and/or storage medium of the terminal.

The software product 700 of the invention additionally comprises means 708 for forming an authentication request and for possibly encrypting it and for showing the formed authentication request to the user, e.g. over the terminal 600 or a digital television connected to the terminal 600. The software product 700 may also use means 708 to form a bill on the basis of a characteristic essential for the charging for the quality, duration, number and/or similar of the conditional contents ordered by the user, and the bill can be shown to the user e.g. over the terminal 600 of a digital television connected to the terminal 600. The software may acquire price information from data integrated in the free demo parts of conditional contents, or optionally it can enquire about the price information from the producer of the conditional content, as for instance from a database of the producer of the conditional content. Also, the formed bill, or at least information of the amount of the bill, can be integrated in the authentication request formed with the aid of the means 708.

Further, the software product 700 comprises means 710 for processing a received authentication code under the encryption method included in the software product, in order to decrypt the encryption of the encrypted authentication code and to check the validity of the authentication code. The software product 700 may comprise also means 712 for interpreting and performing other data in the authentication code, such as, for instance, for interpreting and supervising the respect of any validity periods, performance moments and other restrictions in the authentication code. The software product 700 of the invention comprises preferably also means 714 for decrypting the encryption of conditional contents defined in the authentication code and/or for showing them to the user. The encryption of conditional contents can be decrypted using e.g. a key intended for decrypting an encryption included in a software product, if a separate permission for decryption has been given e.g. in connection with the authentication code, or optionally, a key for decrypting the encryption can be transmitted also in connection with the authentication code.

It should be noted that at least part of the means 702-714 included in the software product 700 can advantageously be performed by programming.

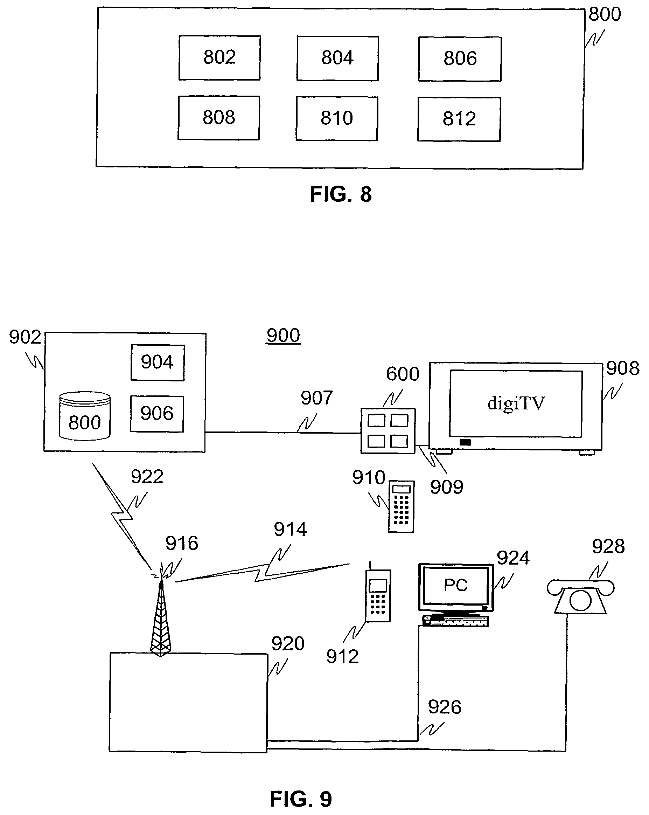

Figure 8 is a block diagram of an exemplified authentication server 800 in accordance with the present invention, the authentication server 800 comprising data communication means 802 for arranging the authentication server in data transmission communication with producers providing conditional contents and producers providing software to a data transmission network, such as, for instance, a digital television transmission network. Most preferably, the authentication server may be integrated in the party producing conditional content and software. Additionally, the authentication server 800 may communicate over data communication means 802 with e.g. at least one terminal connected to a data transmission network and with at least one operator, such as, for instance, an operator producing Internet services and a telephone operator, and also other parties transmitting invoicing and authentication requests or authentication codes.

The authentication server 800 may also comprise at least one storage unit 804 comprising volatile and/or non-volatile storage and at least one processor 806 for processing authentication requests transmitted to the authentication server, for decrypting them and for interpreting and storing the data included in the authentication requests. Moreover, the authentication server 800 may comprise means 808 for enquiring the encryption methods used in the encryption of the conditional contents defined in the authentication request transmitted to the authentication server and for enquiring the algorithmics contained in the software run in the terminal that has generated the authentication request with the producers of conditional contents and software.

The authentication server 800 additionally comprises typically means 810 for forming an authentication code to be sent to the terminal in accordance with the data delivered in connection with the authentication request it has received and with the data it has received from the producers of conditional contents and of software. The authentication server 800 may use data about the conditional content ordered by the user, encryption of the conditional content, the moment of content performance and validity period desired by the user, and about the user terminal identification when generating the authentication code. The authentication server 800 may further comprise means 812 for checking the payment of the bill incurred to the user for the service order, e.g. from an operator producing Internet services, a telephone operator and also from other parties transmitting invoicing and authentication requests or authentication codes. The authentication server 800 may check the amount of the bill to be paid and any other data e.g. in the authentication request sent to the authentication server. The authentication server may also check the cost incurred by performance of the conditional contents ordered e.g. from the producers of conditional contents or the database means of these.

Figure 9 shows an exemplified system 900 for performing a conditional content in one embodiment of the present invention. The system 900 of the invention comprises typically at least one party 904 producing a conditional content, at least one party 906 producing software and an authentication server 800. The party 904 producing a conditional content, the party 906 producing software and the authentication server 800 may be separate units, however, in one embodiment, they may also be integrated to form one single functional unit 902.

The system of the invention also comprises at least one terminal 600 and the data transmission network 907 required for transmitting e.g. conditional contents and software between the functional unit 902 and the terminals 600. The system 900 may also comprise a device to be connected to the terminal 600 over the data transmission means 906, such as, for instance, a digital television 908 or a computer comprising a digital television card for displaying conditional contents, free contents and demo parts of conditional contents and for showing an authentication request. The system 900 may also comprise a remote control 910 for controlling the terminal 600 and/or the digital television 908, for selecting the desired conditional contents and for feeding an authentication request into the terminal 600. In one embodiment of the invention, the terminal 600 may be integrated in the digital television 908 or optionally a digital television card connected to a computer.

In addition, the system 900 comprises means, such as a mobile phone 912, a phone 928 and a computer 924, for sending an authentication request to the authentication server 800. The authentication request can be transmitted to the authentication server 800 via an operator 920, such as a mobile phone operator, a WAP operator, a telephone operator or an Internet operator. Additionally, the operator 920 may be a call centre, which the user may contact using a wire phone 928. The operator 920 used in the system 900 can be disposed to take care also of the invoicing of the user. Invoicing can preferably be carried out based on mobile phone subscription, for instance, the user paying the conditional content he has ordered in connection with the mobile phone bill addressed to him.

The operator 920 may be disposed to check also the price of the conditional content ordered by the user, e.g. in the authentication request the user has sent to the operator. The operator may check the costs incurred by performance of ordered conditional contents also with the producers of conditional contents or with the database means of these. In the case of an Internet operator, invoicing can be carried out under a co-operation agreement with Internet banks, or the user may feed data from his bank or credit card in the database of the Internet operator, using e.g. a XML form available on the Internet pages of the Internet operator.

The mobile unit 912 used in the system 900 may communicate with a mobile phone or WAP operator and the computer 924 used in the system 900 may communicate with the Internet operator over any data transmission connection 914 and 926 known by those skilled in the art. Moreover, the producer of conditional content 904, the software producer 906, the authentication server 800 or a functional unit 902 formed by these may communicate with the operator 920 over a data transmission connection 922 in order to obtain an authentication request and to check invoicing data. The data transmission connection 922 may be any data transmission connection known by those skilled in the art. The data transmission connections 914, 926 and 922 are typically compatible with at least one of the following protocols: TCP/IP, CDMA, GSM, HSCSD, GPRS, WCDMA, EDGE, UMTS, Teldesic, Iridium, Inmarsat, WLAN, DIGI-TV and imode.

Only a number of embodiments of the solution of the invention are described above. The principle of the invention can naturally be varied within the scope defined by the claims with respect to implementation details and fields of application, for instance. In particular, the terminal may be any terminal having suitable means for running the software product of the invention. The terminal may be a separate terminal or it may be integrated in a digital television or a computer circuit or circuit board, such as a digital television card, for instance.

## Claims

1. A method (200) for performing a conditional content in a terminal (600), the method comprising
- delivering (202) a software product (700) to the terminal (600), the software product (700) comprising a function for generating an authentication request required for ordering at least one part of the conditional content, and a function for performing the at least one part of the conditional content,
- transmitting (204) the conditional content over a data transmission network (907), to the terminal (600),
- generating (212) an authentication request identifying the at least one part of the conditional content at least partly by means of said function included in the software product (700) for delivery at least partly to an authentication server (800) for generating an authentication code corresponding to said authentication request,
- generating (214) an authentication code for delivery to said terminal (600) using the authentication server (800) and based at least partly on said authentication request delivered to the authentication server,
- delivering (216) said authentication code to said terminal (600), and
- performing (218) said at least one part of the conditional content by activating the function of the software product (700) for performing the conditional content with the aid of said authentication code,
**characterised in that**
the data transmission network (907) is a digital television transmission network,
the software is delivered over the digital transmission network to the terminal (600), the authentication request and the authentication code are delivered over a different network than the software and the conditional content, and the authentication request and the authentication code are sent over a mobile phone connection (914), a payment of the conditional content ordered in the authentication request is checked by the authentication server (800) before the authentication code is sent by sending an enquiry to an operator (920) of the mobile connection (914), which delivers the authentication request and carries out invoicing,
the delivered authentication code is fed to terminal (600) using a keyboard or a remote control (910) of the terminal (600), and
the conditional content is displayed by a digital television (908) that is connected to the terminal (600).

2. A method as defined in claim 1, **characterised in that** said conditional content is a pay content to be transmitted in the data transmission network (907) and to be conditionally performed.

3. A method as defined in claim 1, **characterised in that** said software product (700) to be delivered to said terminal (600) comprising a function needed for performing at least one part of the conditional content receives (206) at least one of the following contents transmitted in the data transmission network (907); free contents, free demo parts of conditional contents and conditional contents.

4. A method as defined in claim 1, **characterised in that** at least one part of said authentication request is transmitted to the authentication server (800).

5. A method as defined in claim 1, **characterised in that** said authentication code is generated by means of the authentication server (800).

6. A method as defined in claim 1, **characterised in that** at least one part of the authentication request is transmitted to the authentication server (800) in the form of a text message.

7. A method as defined in claim 1, **characterised in that** at least one part of said authentication request is transmitted to the authentication server (800) via at least one of the following operators (920): an Internet operator, a mobile phone operator and a call centre.

8. A method as defined in claim 1, **characterised in that** said authentication request comprises at least one piece of information among the following: information about the conditional content ordered by the user, terminal (600) identification data, serial number of the terminal (600) processor, serial number of the terminal (600) memory unit, information about the software product (700) to be run in the terminal (600), version number of the software product (700), data including the algorithmics of the software product (700), information about the validity period of the software product (700), price information about the conditional content ordered by the user, information about the desired period of validity of the conditional content and information about the desired moment of performance of the conditional content.

9. A method as defined in claim 8, **characterised in that** said price information is generated on the basis of at least one of the following: price information integrated in the demo parts of the contents, the database of the content producer, the delivery time of the conditional content, the validity period of the conditional content, a characteristic of the conditional content and the number of conditional contents ordered.

10. A method as defined in claim 8, **characterised in that** the data included in the authentication request and/or authentication code are in processed form.

11. A method as defined in claim 1, **characterised in that** said authentication request and/or authentication code is delivered in encrypted form.

12. A method as defined in claim 1, **characterised in that**, before the authentication code is delivered to the terminal (600), the payment of the bills incurred by the contents ordered in the authentication request is checked with at least one of the following parties (920): an Internet operator, an Internet bank, a mobile phone operator and a call centre.

13. A method as defined in claim 1, **characterised in that** said authentication request and said authentication code are delivered under at least one of the following data transmission specifications: TCP/IP, CDMA, GSM, HSCSD, GPRS, WCDMA, EDGE, UMTS, Teldesic, Iridium, Inmarsat, WLAN, DIGI-TV and imode.

14. A system (900) for performing a conditional content in a terminal (600), the system (900) comprising at least data transmission network (907), at least one terminal (600) connected to this, and a unit (904) producing conditional contents and an authentication server (800), wherein the system (900) further comprises
- means (906, 907) for delivering the software product (700) to the terminal (600), the software product (700) comprising a function for generating an authentication request needed for ordering at least one part of a conditional content, and a function for performing at least one part of a conditional content,
- a data transmission network (907) for transmitting the conditional content to the terminal (600),
- means (708) for generating at least partly the authentication request identifying said at least one part of a conditional content using said function including a software product (700) for delivery of said authentication request at least partly to an authentication server (800) for generation of an authentication code corresponding to said authentication request,
- means (810) for generating an authentication code for delivery to said terminal (600), based at least partly on the authentication request delivered to said authentication server (800),
- means (910, 912, 916, 922, 924, 926, 928) for delivery of said authentication code to said terminal (600), and
- means (714) for performing said at least one part of the conditional content by activating the function of the software product for performing the conditional content with the aid of said authentication code,
**characterised in that**
the data transmission network (907) used for delivering the conditional content is a digital television transmission network,
the terminal (600) is connected to a digital television (908) that is used for displaying the conditional content,
the software is delivered over the digital transmission network to the terminal (600), the authentication request and the authentication code are delivered over a different network than the software and the conditional content, and the authentication request and the authentication code are sent over a mobile phone connection (914), a payment of the conditional content ordered in the authentication request is checked by the authentication server (800) before the authentication code is sent by sending an enquiry to an operator (920) of the mobile connection (914), which delivers the authentication request and carries out invoicing,
the delivered authentication code is fed to terminal (600) using a keyboard or a remote control (910) of the terminal (600), and
the conditional content is displayed by a digital television (908) that is connected to the terminal (600).

15. A system as defined in claim 14, **characterised in that** said software product (700) comprising a function needed for performing said at least one part of the conditional content to be delivered to the terminal (600) comprises means (702) for receiving at least one of the following contents to be transmitted in the data transmission network (907): a free content, the demo part of a conditional content and a conditional content.

16. A system as defined in claim 14, **characterised in that** the system comprises means (907, 912, 924, 914, 926, 920, 916, 922) for delivery of at least part of said authentication request to the authentication server (800).

17. A system as defined in claim 14, **characterised in that** the system comprises means (810) for generating said authentication code with the aid of the authentication server (800).

18. A system as defined in claim 14, **characterised in that** the system comprises means (912, 914, 916, 920) for delivery of at least one part of said authentication request to the authentication server (800) in the form of a text message.

19. A system as defined in claim 14, **characterised in that** the system comprises means (912, 924, 928, 914, 926) for delivery of at least one part of said authentication request to the authentication server (800) via at least one of the following operators (920): an Internet operator, a mobile phone operator and a call centre.

20. A system as defined in claim 14, **characterised in that** the system comprises means (704, 706, 708) for including at least one of the following piece of information in the authentication request: information about the conditional content ordered by the user, terminal (600) identification data, serial number of the terminal (600) processor, serial number of the terminal (600) memory unit, information about the software product (700) to be run in the terminal (600), version number of the software product (700), data including the algorithmics of the software product (700), information about the validity period of the software product (700), price information about the conditional content ordered by the user, information about the desired period of validity of the conditional content and information about the desired moment of performance of the conditional content.

21. A system as defined in claim 20, **characterised in that** the system comprises means (807) for generating said price information on the basis of at least one of the following: price information integrated in the demo parts of the contents, the database of the content producer, the delivery time of the conditional content, the validity period of the conditional content, a characteristic of the conditional content and the number of conditional contents ordered.

22. A system as defined in claim 20, **characterised in that** the system comprises means (604, 606) for bringing the data included in the authentication request and/or authentication code into a processed form.

23. A system as defined in claim 14, **characterised in that** the system comprises means (604, 606, 804, 806) for encrypting said authentication request and/or authentication code.

24. A system as defined in claim 14, **characterised in that** the system comprises means (812) for checking the payment of the bills incurred by the contents ordered in the authentication request, before the authentication code is delivered to the terminal, with at least one of the following parties (920): an Internet operator, an Internet bank, a mobile phone operator and a call centre.

25. A system as defined in claim 14, **characterised in that**, for delivery of said authentication request and said authentication code, the system can be made compatible with at least one of the following data transmission specifications: TCP/IP, CDMA, GSM, HSCSD, GPRS, WCDMA, EDGE, UMTS, Teldesic, Iridium, Inmarsat, WLAN, DIGI-TV and imode.

## Patentansprüche

1. Verfahren (200) zum Ausführen eines bedingten Inhalts in einem Endgerät (600), wobei das Verfahren Folgendes umfasst:
- Liefern (202) eines Software-Produktes (700) an das Endgerät (600), wobei das Software-Produkt (700) eine Funktion zum Erzeugen einer Autorisierungsanforderung, die benötigt wird, um mindestens einen Teil des bedingten Inhalts zu bestellen, und eine Funktion zum Ausführen des mindestens einen Teils des bedingten Inhalts umfasst,
- Senden (204) des bedingten Inhalts über ein Datenübertragungsnetz (907) an das Endgerät (600),
- Erzeugen (212) einer Autorisierungsanforderung, die den mindestens einen Teil des bedingten Inhalts zumindest teilweise mit Hilfe der in dem Software-Produkt (700) enthaltenen Funktion identifiziert, zum Liefern zumindest teilweise an einen Autorisierungs-Server (800) zum Erzeugen eines Autorisierungscodes, der der Autorisierungsanforderung entspricht,
- Erzeugen (214) eines Autorisierungscodes zum Liefern an das Endgerät (600) unter Verwendung des Autorisierungs-Servers (800) und zumindest teilweise aufgrund der an den Autorisierungs-Server gelieferten Autorisierungsanforderung,
- Liefern (216) des Autorisierungscodes an das Endgerät (600) und
- Ausführen (218) des mindestens einen Teils des bedingten Inhalts durch Aktivieren der Funktion des Software-Produkts (700) zum Ausführen des bedingten Inhalts mit Hilfe des Autorisierungscodes,
**dadurch gekennzeichnet, dass**
das Datenübertragungsnetz (907) ein digitales Fernsehübertragungsnetz ist,
die Software über das digitale Übertragungsnetz an das Endgerät (600) geliefert wird, die Autorisierungsanforderung und der Autorisierungscode über ein anderes Netz als die Software und der bedingte Inhalt geliefert werden und die Autorisierungsanforderung und der Autorisierungscode über eine Mobiltelefonverbindung (914) gesendet werden,
wobei eine Zahlung des in der Autorisierungsanforderung bestellten bedingten Inhalts durch den Autorisierungs-Server (800) überprüft wird, bevor der Autorisierungscode durch Senden einer Anfrage an einen Betreiber (920) der Mobilverbindung (914) gesendet wird, der die Autorisierungsanforderung liefert und die Abrechnung ausführt,
wobei der gelieferte Autorisierungscode dem Endgerät (600) unter Verwendung einer Tastatur oder einer Fernbedienung (910) des Endgeräts (600) eingegeben wird und
der bedingte Inhalt durch einen digitalen Fernseher (908) angezeigt wird, der mit dem Endgerät (600) verbunden ist.

2. Verfahren nach Anspruch 1, **dadurch gekennzeichnet, dass** der bedingte Inhalt ein Bezahlungsinhalt ist, der in dem Datenübertragungsnetz (907) zu senden und bedingt auszuführen ist.

3. Verfahren nach Anspruch 1, **dadurch gekennzeichnet, dass** das an das Endgerät (600) zu liefernde Software-Produkt (700) eine Funktion umfasst, die benötigt wird, um auszuführen, dass mindestens ein Teil des bedingten Inhalts (206) mindestens einen der folgenden in dem Datenübertagungsnetz (907) gesendeten Inhalte empfängt: kostenlose Inhalte, kostenlose Demoteile von bedingtem Inhalt und bedingte Inhalte.

4. Verfahren nach Anspruch 1, **dadurch gekennzeichnet, dass** mindestens ein Teil der Autorisierungsanforderung an den Autorisierungs-Server (800) gesendet wird.

5. Verfahren nach Anspruch 1, **dadurch gekennzeichnet, dass** der Autorisierungscode mit Hilfe des Autorisierungs-Servers (800) erzeugt wird.

6. Verfahren nach Anspruch 1, **dadurch gekennzeichnet, dass** mindestens ein Teil der Autorisierungsanforderung in der Form einer Textnachricht an den Autorisierungs-Server (800) gesendet wird.

7. Verfahren nach Anspruch 1, **dadurch gekennzeichnet, dass** mindestens ein Teil der Autorisierungsanforderung über mindestens einen der folgenden Betreiber (920) an den Autorisierungs-Server (800) gesendet wird: einen Internetbetreiber, einen Mobilfunkbetreiber und ein Call-Center.

8. Verfahren nach Anspruch 1, **dadurch gekennzeichnet, dass** die Autorisierungsanforderung mindestens einen Teil von Informationen unter den Folgenden umfasst: Informationen über den durch den Anwender bestellten bedingten Inhalt, Endgerätidentifizierungsdaten (600), Seriennummer des Endgerätprozessors (600), Seriennummer der Endgerätspeichereinheit (600), Informationen über das in dem Endgerät (600) auszuführende Software-Produkt (700), Versionsnummer des Software-Produktes (700), Daten, die die Algorithmen des Software-Produktes (700) enthalten, Informationen über die Gültigkeitsdauer des Software-Produktes (700), Preisinformationen über den durch den Anwender bestellten bedingten Inhalt, Informationen über die gewünschte Gültigkeitsdauer des bedingten Inhalts und Informationen über den gewünschten Moment des Ausführens des bedingten Inhalts.

9. Verfahren nach Anspruch 8, **dadurch gekennzeichnet, dass** die Preisinformationen aufgrund mindestens eines der Folgenden erzeugt wird: Preisinformationen, der in die Demoteile des Inhalts eingebaut sind, die Datenbank des Inhaltserzeugers, der Lieferzeit des bedingten Inhalts, der Gültigkeitsdauer des bedingten Inhalts, einer Eigenschaft des bedingten Inhalts und der Anzahl der bestellten bedingten Inhalte.

10. Verfahren nach Anspruch 8, **dadurch gekennzeichnet, dass** die in der Autorisierungsanforderung und/oder dem Autorisierungscode enthaltenen Daten in einer verarbeiteten Form sind.

11. Verfahren nach Anspruch 1, **dadurch gekennzeichnet, dass** die Autorisierungsanforderung und/oder der Autorisierungscode in einer verschlüsselten Form geliefert wird.

12. Verfahren nach Anspruch 1, **dadurch gekennzeichnet, dass,** bevor der Autorisierungscode an das Endgerät (600) geliefert wird, die Bezahlung der durch die in der Autorisierungsanforderung bestellten Inhalte anfallenden Rechnungen mit mindestens einem der folgenden Beteiligten (920) überprüft wird: einem Internetbetreiber, einer Internetbank, einem Mobilfunkbetreiber und einem Call-Center.

13. Verfahren nach Anspruch 1, **dadurch gekennzeichnet, dass** die Autorisierungsanforderung und der Autorisierungscode unter mindestens einer der folgenden Datenübertragungsspezifikationen geliefert werden: TCP/IP, CDMA, GSM, HSCSD, GPRS, WCDMA, EDGE, UMTS, Teldesic, Iridium, Inmarsat, WLAN, DIGI-TV und imode.

14. System (900) zum Ausführen eines bedingten Inhalts in einem Endgerät (600), wobei das System (900) zumindest ein Datenübertragungsnetz (907), mindestens ein damit verbundenes Endgerät (600) und eine Einheit (904), die bedingte Inhalte erzeugt, und einen Autorisierungs-Server (800) umfasst, wobei das System (900) ferner Folgendes umfasst:
- Mittel (906, 907) zum Liefern des Software-Produktes (700) an das Endgerät (600), wobei das Software-Produkt (700) eine Funktion zum Erzeugen einer Autorisierungsanforderung, die benötigt wird, um mindestens einen Teil eines bedingten Inhalts zu bestellen, und eine Funktion zum Ausführen des mindestens einen Teils des bedingten Inhalts umfasst,
- ein Datenübertragungsnetz (907) zum Senden des bedingten Inhalts an das Endgerät (600),
- Mittel (708) zum Erzeugen zumindest teilweise der Autorisierungsanforderung, die den mindestens einen Teil eines bedingten Inhalts unter Verwendung der Funktion identifiziert, die zumindest teilweise ein Software-Produkt (700) zum Liefern der Autorisierungsanforderung zumindest teilweise an einen Autorisierungs-Server (800) zum Erzeugen eines Autorisierungscodes, der der Autorisierungsanforderung entspricht, enthält,
- Mittel (810) zum Erzeugen eines Autorisierungscodes zum Liefern an das Endgerät (600) zumindest teilweise aufgrund der an den Autorisierungs-Server gelieferten Autorisierungsanforderung (800),
- Mittel (910, 912, 916, 922, 924, 926, 928) zum Liefern des Autorisierungscodes an das Endgerät (600) und
- Mittel (714) zum Ausführen des mindestens einen Teils des bedingten Inhalts durch Aktivieren der Funktion des Software-Produktes zum Ausführen des bedingten Inhalts mit Hilfe des Autorisierungscodes,
**dadurch gekennzeichnet, dass**
das für das Liefern des bedingten Inhalts verwendete Datenübertragungsnetz (907) ein digitales Fernsehübertragungsnetz ist,
das Endgerät (600) mit einem digitalen Fernseher (908) verbunden ist, der für das Anzeigen des bedingten Inhalts verwendet wird,
die Software über das digitale Übertragungsnetz an das Endgerät (600) geliefert wird, die Autorisierungsanforderung und der Autorisierungscode über ein anderes Netz als die Software und der bedingte Inhalt geliefert werden und die Autorisierungsanforderung und der Autorisierungscode über eine Mobiltelefonverbindung (914) gesendet werden,
wobei eine Bezahlung des in der Autorisierungsanforderung bestellten bedingten Inhalts durch den Autorisierungs-Server (800) überprüft wird, bevor der Autorisierungscode durch Senden einer Anfrage an einen Betreiber (920) der Mobilverbindung (914) gesendet wird, der die Autorisierungsanforderung liefert und die Abrechnung ausführt,
wobei der gelieferte Autorisierungscode dem Endgerät (600) unter Verwendung einer Tastatur oder einer Fernbedienung (910) des Endgeräts (600) eingegeben wird und
der bedingte Inhalt durch einen digitalen Fernseher (908) angezeigt wird, der mit dem Endgerät (600) verbunden ist.

15. System nach Anspruch 14, **dadurch gekennzeichnet, dass** das Software-Produkt (700) eine Funktion umfasst, die benötigt wird, um auszuführen, dass mindestens ein Teil des an das Endgerät (600) zu sendenden bedingten Inhalts Mittel (702) umfasst, um mindestens einen der folgenden in dem Datenübertragungsnetz (907) zu sendenden Inhalte zu empfangen: einen kostenlosen Inhalt, den Demoteil eines bedingten Inhalts und einen bedingten Inhalt.

16. System nach Anspruch 14, **dadurch gekennzeichnet, dass** das System Mittel (907, 912, 924, 914, 926, 920, 916, 922) zum Liefern mindestens eines Teils der Autorisierungsanfrage an den Autorisierungs-Server (800) umfasst.

17. System nach Anspruch 14, **dadurch gekennzeichnet, dass** das System Mittel (810) zum Erzeugen des Autorisierungscodes mit Hilfe des Autorisierungs-Servers (800) umfasst.

18. System nach Anspruch 14, **dadurch gekennzeichnet, dass** das System Mittel (912, 914, 916, 920) zum Liefern mindestens eines Teils der Autorisierungsanforderung in der Form einer Textnachricht an den Autorisierungs-Server (800) umfasst.

19. System nach Anspruch 14, **dadurch gekennzeichnet, dass** das System Mittel (912, 924, 928, 914, 926) zum Liefern mindestens eines Teils der Autorisierungsanforderung über einen der folgenden Betreiber (920) an den Autorisierungs-Server (800) umfasst: einen Internetbetreiber, einen Mobilfunkbetreiber und ein Call-Center.

20. System nach Anspruch 14, **dadurch gekennzeichnet, dass** das System Mittel (704, 706, 708) zum Einschließen mindestens eines der folgenden Teile von Informationen in die Autorisierungsanforderung umfasst: Informationen über den durch den Anwender bestellten bedingten Inhalt, Endgerätidentifizierungsdaten (600), Seriennummer des Endgerätprozessors (600), Seriennummer der Endgerätspeichereinheit (600), Informationen über das in dem Endgerät (600) auszuführende Software-Produkt (700), Versionsnummer des Software-Produktes (700), Daten, die die Algorithmen des Software-Produktes (700) enthalten, Informationen über die Gültigkeitsdauer des Software-Produktes (700), Preisinformationen über den durch den Anwender bestellten bedingten Inhalt, Informationen über die gewünschte Gültigkeitsdauer des bedingten Inhalts und Informationen über den gewünschten Moment des Ausführens des bedingten Inhalts.

21. System nach Anspruch 20, **dadurch gekennzeichnet, dass** das System Mittel (807) zum Erzeugen von Preisinformationen aufgrund mindestens eines der Folgenden umfasst: Preisinformationen, die in die Demoteile des Inhalts eingebaut sind, der Datenbank des Inhaltserzeugers, der Lieferzeit des bedingten Inhalts, der Gültigkeitsdauer des bedingten Inhalts, einer Eigenschaft des bedingten Inhalts und der Anzahl der bestellten bedingten Inhalte.

22. System nach Anspruch 20, **dadurch gekennzeichnet, dass** das System Mittel (604, 606) zum Bringen der in der Autorisierungsanforderung und/oder dem Autorisierungscode enthaltenen Daten in eine verarbeitete Form umfasst.

23. System nach Anspruch 14, **dadurch gekennzeichnet, dass** das System Mittel (604, 606, 804, 806) zum Verschlüsseln der Autorisierungsanforderung und/oder des Autorisierungscodes umfasst.

24. System nach Anspruch 14, **dadurch gekennzeichnet, dass** das System Mittel (812) zum Überprüfen der Bezahlung der durch die in der Autorisierungsanforderung bestellten Inhalte anfallenden Rechnungen mit mindestens einem der folgenden Beteiligten (920) umfasst: einem Internetbetreiber, einer Internetbank, einem Mobiltelefonbetreiber und einem Call-Center, bevor der Autorisierungscode an das Endgerät geliefert wird.

25. System nach Anspruch 14, **dadurch gekennzeichnet, dass** für das Liefern der Autorisierungsanforderung und des Autorisierungscodes das System mit mindestens einer der folgenden Datenübertragungsspezifikationen kompatibel gemacht werden kann: TCP/IP, CDMA, GSM, HSCSD, GPRS, WCDMA, EDGE, UMTS, Teldesic, Iridium, Inmarsat, WLAN, DIGI-TV und imode.

## Revendications

1. Procédé (200) pour exécuter un contenu conditionnel dans un terminal (600), le procédé comprenant
- la délivrance (202) d'un produit logiciel (700) au terminal (600), le produit logiciel (700) comprenant une fonction de génération d'une requête d'authentification nécessaire pour commander au moins une partie du contenu conditionnel, et une fonction d'exécution de l'au moins une partie du contenu conditionnel,
- la transmission (204) du contenu conditionnel sur un réseau de transmission de données (907), au terminal (600),
- la génération (212) d'une requête d'authentification qui identifie l'au moins une partie du contenu conditionnel au moins partiellement au moyen de ladite fonction incluse dans le produit logiciel (700) à délivrer au moins partiellement à un serveur d'authentification (800) pour générer un code d'authentification correspondant à ladite requête d'authentification,
- la génération (214) d'un code d'authentification à délivrer audit terminal (600) en utilisant le serveur d'authentification (800) et en fonction au moins partiellement de ladite requête d'authentification délivrée au serveur d'authentification,
- la délivrance (216) dudit code d'authentification audit terminal (600), et
- l'exécution (218) de ladite au moins une partie du contenu conditionnel en activant la fonction du produit logiciel (700) pour exécuter le contenu conditionnel à l'aide dudit code d'authentification,
**caractérisé en ce que**
le réseau de transmission de données (907) est un réseau de transmission de télévision numérique,
le logiciel est délivré sur le réseau de transmission numérique au terminal (600), la requête d'authentification et le code d'authentification sont délivrés sur un réseau différent de celui du logiciel et du contenu conditionnel, et la requête d'authentification et le code authentification sont envoyés sur une connexion téléphonique mobile (914),
un paiement du contenu conditionnel commandé dans la requête authentification est vérifié par le serveur d'authentification (800) avant que le code d'authentification soit envoyé en envoyant une demande de renseignement à un opérateur (920) de la connexion mobile (914), lequel délivre la requête d'authentification et effectue la facturation,
le code d'authentification délivré est passé au terminal (600) au moyen d'un clavier ou d'une télécommande (910) du terminal (600), et
le contenu conditionnel est affiché par un téléviseur numérique (908) qui est connecté au terminal (600).

2. Procédé selon la revendication 1, **caractérisé en ce que** ledit contenu conditionnel est un contenu payant à transmettre dans le réseau de transmission de données (907) et à exécuter conditionnellement.

3. Procédé selon la revendication 1, **caractérisé en ce que** ledit produit logiciel (700) à délivrer audit terminal (600) comprenant une fonction nécessaire pour exécuter au moins une partie du contenu conditionnel reçoit (206) au moins l'un des contenus suivants transmis dans le réseau de transmission de données (907) : des contenus gratuits, des parties de démonstration gratuites de contenus conditionnels et des contenus conditionnels.

4. Procédé selon la revendication 1, **caractérisé en ce qu'**au moins une partie de ladite requête d'authentification est transmise au serveur d'authentification (800).

5. Procédé selon la revendication 1, **caractérisé en ce que** ledit code d'authentification est généré au moyen du serveur d'authentification (800).

6. Procédé selon la revendication 1, **caractérisé en ce qu'**au moins une partie de la requête d'authentification est transmise au serveur d'authentification (800) sous la forme d'un message de texte.

7. Procédé selon la revendication 1, **caractérisé en ce qu'**au moins une partie de la requête d'authentification est transmise au serveur d'authentification (800) par l'intermédiaire d'au moins l'un des opérateurs suivants (920) : un opérateur Internet, un opérateur de téléphonie mobile et un centre d'appels.

8. Procédé selon la revendication 1, **caractérisé en ce que** ladite requête d'authentification comprend au moins un élément d'information parmi les suivants : information sur le contenu conditionnel commandé par l'utilisateur, données d'identification du terminal (600), numéro de série du processeur du terminal (600), numéro de série de l'unité de mémoire du terminal (600), information sur le produit logiciel (700) à exécuter dans le terminal (600), numéro de version du produit logiciel (700), données comportant l'algorithme du produit logiciel (700), information sur la période de validité du produit logiciel (700), information sur le coût du contenu conditionnel commandé par l'utilisateur, information sur la période de validité souhaitée du contenu conditionnel et information sur le moment d'exécution souhaité du contenu conditionnel.

9. Procédé selon la revendication 8, **caractérisé en ce que** ladite information de coût est générée en fonction d'au moins l'un : d'une information de coût intégrée dans les parties de démonstration des contenus, de la base de données du producteur du contenu, de l'heure de délivrance du contenu, de la période de validité du contenu conditionnel, d'une caractéristique du contenu conditionnel et du nombre de contenus conditionnels commandés.

10. Procédé selon la revendication 8, **caractérisé en ce que** les données incluses dans la requête d'authentification et/ou le code d'authentification sont dans une forme traitée.

11. Procédé selon la revendication 1, **caractérisé en ce que** ladite requête d'authentification et/ou ledit code d'authentification sont délivrés dans une forme cryptée.

12. Procédé selon la revendication 1, **caractérisé en ce que**, avant que le code d'authentification soit délivré au terminal (600), le paiement des factures encourues pour les contenus commandés dans la requête d'authentification est vérifié avec au moins l'une des parties suivantes (920) : un opérateur Internet, une banque Internet, un opérateur de téléphonie mobile et un centre d'appels.

13. Procédé selon la revendication 1, **caractérisé en ce que** ladite requête d'authentification et ledit code d'authentification sont délivrés selon au moins l'une des spécifications de transmission de données suivantes : TCP/IP, CDMA, GSM, HSCSD, GPRS, WCDMA, EDGE, UMTS, Teldesic, Iridium, Inmarsat, WLAN, DIGI-TV et imode.

14. Système (900) pour exécuter un contenu conditionnel dans un terminal (600), le système (900) comprenant au moins un réseau de transmission de données (907), au moins un terminal (600) connecté à celui-ci, et une unité (904) produisant des contenus conditionnels et un serveur d'authentification (800), le système (900) comprenant en outre
- des moyens (906, 907) de délivrance du produit logiciel (700) au terminal (600), le produit logiciel (700) comprenant une fonction de génération d'une requête d'authentification nécessaire pour commander au moins une partie d'un contenu conditionnel, et une fonction d'exécution de l'au moins une partie d'un contenu conditionnel,
- un réseau de transmission de données (907) pour transmettre le contenu conditionnel au terminal (600),
- un moyen (708) de génération au moins partiellement de la requête d'authentification qui identifie ladite au moins une partie d'un contenu conditionnel en utilisant ladite fonction comportant un produit logiciel (700) en vue de la délivrance de ladite requête d'authentification au moins partiellement à un serveur d'authentification (800) pour générer un code d'authentification correspondant à ladite requête d'authentification,
- un moyen (810) de génération d'un code d'authentification à délivrer audit terminal (600), en fonction au moins partiellement de ladite requête d'authentification délivrée au serveur d'authentification (800),
- des moyens (910, 912, 916, 922, 924, 926, 928) de délivrance dudit code d'authentification audit terminal (600), et
- un moyen (714) d'exécution de ladite au moins une partie du contenu conditionnel en activant la fonction du produit logiciel pour exécuter le contenu conditionnel à l'aide dudit code d'authentification,
**caractérisé en ce que**
le réseau de transmission de données (907) utilisé pour délivrer le contenu conditionnel est un réseau de transmission de télévision numérique,
le terminal (600) est connecté à un téléviseur (908) qui est utilisé pour afficher le contenu conditionnel,
le logiciel est délivré sur le réseau de transmission numérique au terminal (600), la requête d'authentification et le code d'authentification sont délivrés sur un réseau différent de celui du logiciel et du contenu conditionnel, et la requête d'authentification et le code authentification sont envoyés sur une connexion téléphonique mobile (914),
un paiement du contenu conditionnel commandé dans la requête authentification est vérifié par le serveur d'authentification (800) avant que le code d'authentification soit envoyé en envoyant une demande de renseignement à un opérateur (920) de la connexion mobile (914), lequel délivre la requête d'authentification et effectue la facturation,
le code d'authentification délivré est passé au terminal (600) au moyen d'un clavier ou d'une télécommande (910) du terminal (600), et
le contenu conditionnel est affiché par un téléviseur numérique (908) qui est connecté au terminal (600).

15. Système selon la revendication 14, **caractérisé en ce que** ledit produit logiciel (700) comprenant une fonction nécessaire pour exécuter ladite au moins une partie du contenu conditionnel à délivrer au terminal (600) comprend un moyen (702) de réception d'au moins l'un des contenus suivants à transmettre dans le réseau de transmission de données (907) : un contenu gratuit, la partie de démonstration gratuite d'un contenu conditionnel et un contenu conditionnel.

16. Système selon la revendication 14, **caractérisé en ce que** le système comprend des moyens (907, 912, 924, 914, 926, 920, 916, 922) de délivrance d'au moins une partie de ladite requête d'authentification au serveur d'authentification (800).

17. Système selon la revendication 14, **caractérisé en ce que** le système comprend un moyen (810) de génération dudit code d'authentification à l'aide du serveur d'authentification (800).

18. Système selon la revendication 14, **caractérisé en ce que** le système comprend des moyens (912, 914, 916, 920) de délivrance de l'au moins une partie de ladite requête d'authentification au serveur d'authentification (800) sous forme d'un message de texte.

19. Système selon la revendication 14, **caractérisé en ce que** le système comprend des moyens (912, 924, 928, 914, 926) de délivrance d'au moins une partie de ladite requête d'authentification au serveur d'authentification (800) par l'intermédiaire d'au moins l'un des opérateurs suivants (920) ; un opérateur Internet, un opérateur de téléphonie mobile et un centre d'appels.

20. Système selon la revendication 14, **caractérisé en ce que** le système comprend des moyens (704, 706, 708) d'inclusion d'au moins l'un des éléments d'information suivants dans la requête d'authentification : information sur le contenu conditionnel commandé par l'utilisateur, données d'identification du terminal (600), numéro de série du processeur du terminal (600), numéro de série de l'unité de mémoire du terminal (600), informations sur le produit logiciel (700) à exécuter dans le terminal (600), numéro de version du produit logiciel (700), données comportant l'algorithme du produit logiciel (700), informations sur la période de validité du produit logiciel (700), information sur le coût du contenu conditionnel commandé par l'utilisateur, information sur la période de validité souhaitée du contenu conditionnel et information sur le moment d'exécution souhaité du contenu conditionnel.

21. Système selon la revendication 20, **caractérisé en ce que** le système comprend un moyen (807) de génération de ladite information de coût en fonction d'au moins l'un : d'une information de coût intégrée dans les parties de démonstration des contenus, de la base de données du producteur du contenu, de l'heure de délivrance du contenu, de la période de validité du contenu conditionnel, d'une caractéristique du contenu conditionnel et du nombre de contenus conditionnels commandés.

22. Système selon la revendication 20, **caractérisé en ce que** le système comprend des moyens (604, 606) pour présenter les données incluses dans la requête d'authentification et/ou le code d'authentification dans une forme traitée.

23. Système selon la revendication 14, **caractérisé en ce que** le système comprend des moyens (604, 606, 804, 806) pour crypter ladite requête d'authentification et/ou ledit code d'authentification.

24. Système selon la revendication 14, **caractérisé en ce que** le système comprend un moyen (812) de vérification du paiement des factures encourues pour les contenus commandés dans la requête d'authentification, avant que le code d'authentification soit délivré au terminal, avec au moins l'une des parties suivantes (920) : un opérateur Internet, une banque Internet, un opérateur de téléphonie mobile et un centre d'appels.

25. Système selon la revendication 14, **caractérisé en ce que**, pour la délivrance de ladite requête d'authentification et dudit code d'authentification, le système peut être rendu compatible avec au moins l'une des spécifications de transmission de données suivantes : TCP/IP, CDMA, GSM, HSCSD, GPRS, WCDMA, EDGE, UMTS, Teldesic, Iridium, Inmarsat, WLAN, DIGI-TV et imode.
